(19) **Europäisches Patentamt / European Patent Office / Office européen des brevets**

(11) **EP 3 276 206 A1**

(12) # EUROPEAN PATENT APPLICATION
published in accordance with Art. 153(4) EPC

(43) Date of publication:
**31.01.2018 Bulletin 2018/05**

(21) Application number: **16768154.3**

(22) Date of filing: **01.02.2016**

(51) Int Cl.:
*F16H 25/12* (2006.01)   *F16H 9/12* (2006.01)

(86) International application number:
**PCT/JP2016/052856**

(87) International publication number:
**WO 2016/152251 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **24.03.2015   JP 2015061657**

(71) Applicant: **Jatco Ltd**
**Fuji-shi, Shizuoka 417-8585 (JP)**

(72) Inventors:
• **YOKOYAMA, Kazuhiko**
**Fuji-shi**
**Shizuoka 417-8585 (JP)**

• **FUKUI, Hideyuki**
**Fuji-shi**
**Shizuoka 417-8585 (JP)**
• **TANAKA, Masato**
**Fuji-shi**
**Shizuoka 417-8585 (JP)**
• **YOKOTE, Tatsuo**
**Fuji-shi**
**Shizuoka 417-8585 (JP)**
• **TSUCHIYA, Ichirou**
**Fuji-shi**
**Shizuoka 417-8585 (JP)**

(74) Representative: **Grünecker Patent- und Rechtsanwälte**
**PartG mbB**
**Leopoldstraße 4**
**80802 München (DE)**

(54) **AUTOMATIC-TRANSMISSION TORQUE CAM DEVICE**

(57)    There are provided a drive cam member (91, 92) including a drive cam surface (91D, 92C) which has an annular shape, and which is arranged to be rotated by receiving a rotation torque; and a driven cam member (92, 93) which includes a driven cam surface that has an annular shape, and that confronts the drive cam surface (91D, 92C), and which is arranged to be driven to be rotated through a ball (95) by the drive cam member (91, 92). Each of the drive cam surface and the driven cam surface includes an entire annular circumference equally divided into at least two sections each having a helical curved surface according to a cam angle, and connection portions (91J, 92J, 93J) formed between the equally divided helical curved surfaces. At least one of the helical curved surfaces of the drive cam surface and the driven cam surface has a guide groove (92G) which are continuous in an entire circumference, and which is arranged to guide a movement of the ball.

**FIG. 6**

EP 3 276 206 A1

**Description**

**Technical Field**

This invention relates to a torque cam device for an automatic transmission.

**Background Art**

There is disclosed a thrust generating mechanism of a shift mechanism of a belt continuously variable transmission which uses a cam mechanism (for example, patent documents 1 and 2).

Each of these cam mechanisms is arranged to generate a thrust in accordance with a rotation phase difference of two cam members. Each of the cam members includes a cam surface inclined in an axial direction with respect to an annular surface perpendicular to a rotation axis. Balls (rolling members) are disposed between the cam surfaces. By providing the rotation phase difference to the two cam members, the two cam member are abutted on or apart from each other while the cam surfaces are slidalby moved on each other through the balls, so that the entire length thereof (axial length) is varied. Moreover, a force (thrust force) in the rotation axis direction is generated.

The two cam members include a plurality of sets of cam surfaces positioned at predetermined radial positions to confront each other. A ball or a plurality of balls are disposed between the cam surfaces. At least two sets of the cam surfaces are needed in consideration of the thrust balance. Moreover, it is possible to relieve (decrease) the load of each of the balls and each of the cam surfaces by providing the plurality of the balls between the cam surfaces.

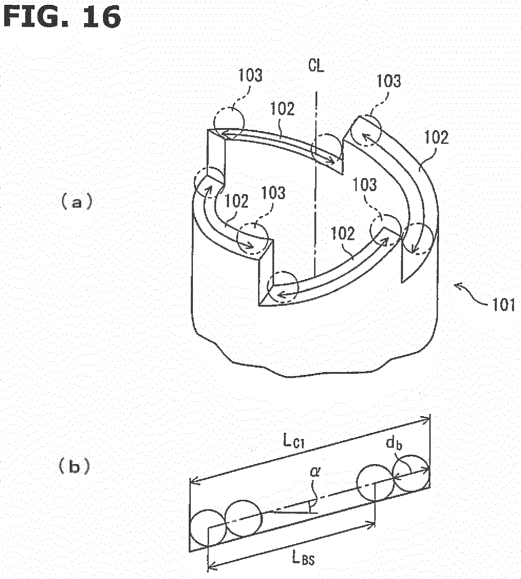

For example, FIG. 16(a) is a perspective view showing one of cam members 101 disclosed in the patent document 2. The cam member 101 includes four cam surfaces 102 extending in a helical shape in a circumferential direction. Each of the balls 103 is provided to one of the cam surfaces 102. The balls 103 are arranged to be moved relative to the cam surfaces 102 along arrows in FIG. 16(a) in ranges of the circumferential strokes of these arrows, and thereby to serve for a smooth relative rotation between cam members, and a generation of the thrust.

However, the above-described cam mechanism has following problems.

That is, in each of the cam surfaces 102, one of the balls 103 serve for the generation of the thrust force while the one of the balls 103 are relatively moved (rolled) along the each of the cam surfaces 102. However, the movement of the one of the balls 103 is restricted near an end portion of the each of the cam surfaces 102, as shown in FIG. 16(b). In a case where the plurality of the balls 103 are provided on each of the cam surfaces 102, the movable stroke $L_{BS}$ of the plurality of (n) balls 103 are represented by following equation where a diameter of this ball 103 is $d_b$, and an entire circumferential length of the cam surface 102 is $L_{C1}$. The movable stroke $L_{BS}$ of the ball 103 is decreased as the number of the balls is increased.

$$L_{BS} = L_{C1} - N \times d_b$$

The relative rotation amount of the two cam members is restricted by the movable stroke $L_{BS}$ of the ball 103. Accordingly, for ensuring the relative axial movement amounts of the two cam members, it is necessary to decrease the number of the balls 103, to increase the helical radius of the helical cam surface 102, or to increase an inclination angle (an inclination angle with respect to a circumferential surface perpendicular to a center axis CL) $\alpha$ of the helical cam surface 102.

In a case where the number of the balls 103 are decreased, the loads of each of the balls and each of the cam surfaces are increased, so that it becomes difficult to generate large thrust. In a case where the helical radius of the cam surface 102 is increased, the size of the device is increased. In a case where the inclination angle $\alpha$ is increased, it does not become possible to smoothly perform the relative rotations of the two cam members with respect to the large thrust, so that it becomes difficult to generate the large thrust.

Accordingly, it is difficult to ensure the relative axial movement amounts of the two cam members. In a case where it is applied to the movable pulley of the belt continuously variable transmission, it is not possible to sufficiently ensure the axial movement stroke of the movable pulley. With this, it is not possible to sufficiently ensure the ratio coverage of the automatic transmission.

It is, therefore, an object of the present invention to provide a torque cam device for an automatic transmission which is devised to solve the above-described problems, to arrange a plurality of balls of between cam surfaces, to ensure a length of each of the cam surfaces without increasing inclination angles of the cam surfaces, to generate large thrust, and to sufficiently ensure a ratio coverage of the automatic transmission.

**Prior Art Document**

**Patent Document**

Patent Document 1: Japanese Utility Model Application Publication No. 58-38055
Patent Document 2: Japanese Patent Application Publication No. 60-26844

**Summary of The Invention**

(1) For attaining the above-described objects, a torque cam device for an automatic transmission according to the present invention, the torque cam device being arranged to convert a rotation torque transmitted in the automatic transmission to an axial thrust, the torque cam device comprises: a drive cam member which includes a first drive cam surface which has an annular shape, and which is arranged to be rotated by receiving the rotation torque; and a driven cam member which includes a first driven cam surface that has an annular shape, and that confronts the first drive cam surface, and which is arranged to be driven to be rotated through a ball by the drive cam member, each of the first drive cam surface and the first driven cam surface including an entire annular circumference equally divided into at least two sections each having a helical curved surface according to a cam angle, and connection portions formed between the equally divided helical curved surfaces, and at least one of the helical curved surfaces of the first drive cam surface and the first driven cam surface having a guide groove which is continuous in an entire circumference, and which is arranged to guide movement of the ball.

(2) Each of the connection portions includes a first connection surface extending in an axial direction from an end portion of one of the both helical curved surfaces connected with each other by the connection portions, and a second connection surface connecting an end portion of the first connection surface, and an end portion of the other of the both helical curved surfaces; and the second connection surface is a surface perpendicular to the axial direction.

(3) The guide groove includes helical groove portions each formed in a helical shape along one of the helical curved surfaces, and connection groove portions each of which is formed between the helical groove portions, and which smoothly connects the helical groove portions.

(4) A plurality of the balls are mounted in a series state within the guide groove.

(A) The guide groove includes an opening portion from which a part of one of the balls is arranged to protrude from one of the helical curved surfaces. The guide groove receives a portion of one of the balls which is greater than a half portion of the one of the balls. The opening portion has an opening width smaller than an outside diameter of one of the balls.

(B) An insertion diameter increasing portion is formed at a part of the opening portion of the guide groove. The insertion diameter increasing portion is for inserting the balls within the guide groove. A detachment preventing portion is formed at the insertion diameter increasing portion. The detachment preventing portion is arranged to prevent the detachment of the inserted balls from the guide groove.

(C) The insertion diameter increasing portion is formed in one of the helical curved surfaces protruding in the axial direction in accordance with a phase angle. The insertion diameter increasing portion is formed at a portion of the one of the helical curbed surfaces which has an axially protruding amount equal to or smaller than an entire axially protruding amount.

(D) The detachment preventing portion is a screw member mounted to close a diameter increasing portion of the insertion diameter increasing portion.

(5) The torque cam device for the automatic transmission as claimed in one of claims 1 to 4, wherein the torque cam device further includes an intermediate cam member which includes a second drive cam surface that is formed on one end of the intermediate cam member, and that is arranged to be abutted on the first drive cam surface, a second driven cam surface that is formed on the other end of the intermediate cam member, and that is arranged to be abutted on the first driven cam surface, and which is arranged to be rotated relative to the driven cam member and the driven cam member; when a power is transmitted from the drive cam member to the driven cam member, the first drive cam surface and the second driven cam surface are abutted on each other to transmit the power; and when the power is transmitted from the driven cam member to the drive cam member, the first driven cam surface and the second drive cam surface are abutted on each other to transmit the power.

(E) Each of the first drive cam surface, the first driven cam surface, the second drive cam surface, and the second driven cam surface has an annular entire circumference which is equally divided into two, and which is a helical curve according to an angle of the cam; stepped connection surfaces are formed on portions between the equally divided helical surfaces. When the power is transmitted from the drive cam member to the driven cam member, the connection surface of the first driven cam surface and the connection surface of the second driven cam surface are abutted on each other. When the power is transmitted from the driven cam member to the drive cam member, the connection surface of the first drive cam surface and the connection surface of the second drive cam surface are abutted on each other.

(F) The second drive cam surfaces and the connection portions of the portions between the second drive cam surface, and the second driven cam surfaces and the connection portions between the portions of the second driven cam surfaces are disposed to have a phase shift.

(G) The first drive cam surface and the first driven cam surface, or the first drive cam surface, the first driven cam surface, the second drive cam surface, and the second driven cam surface has an identical cam angle.

(H) The automatic transmission is an a belt continuously variable transmission including two pulley devices each including a fixed pulley and a movable pulley; and a belt wound around the two pulley devices to transmit a power, and the above-described torque cam device arranged to generate a clamping force to one of the two pulley devices.

(I) In the torque cam device, the drive cam member and the movable pulley rotate as a unit. The driven cam member and the fixed pulley rotate as a unit.

(J) The intermediate cam member is disposed to be rotated relative to the rotation shaft of the pulley device.

In the present invention, the balls are arranged to be moved on the guide groove which are continuous in the entire circumference. Accordingly, it is possible to arrange the plurality of the balls between the cam surfaces, and to ensure the lengths of the cam surfaces without increasing the inclination angles of the cam surfaces. Consequently, in a case where the present invention is applied to the thrust generating mechanism of the shift mechanism of the belt continuously variable transmission, it is possible to produce the large thrust without increasing the size of the device, and to sufficiently ensure the ratio coverage.

**Brief Description of Drawings**

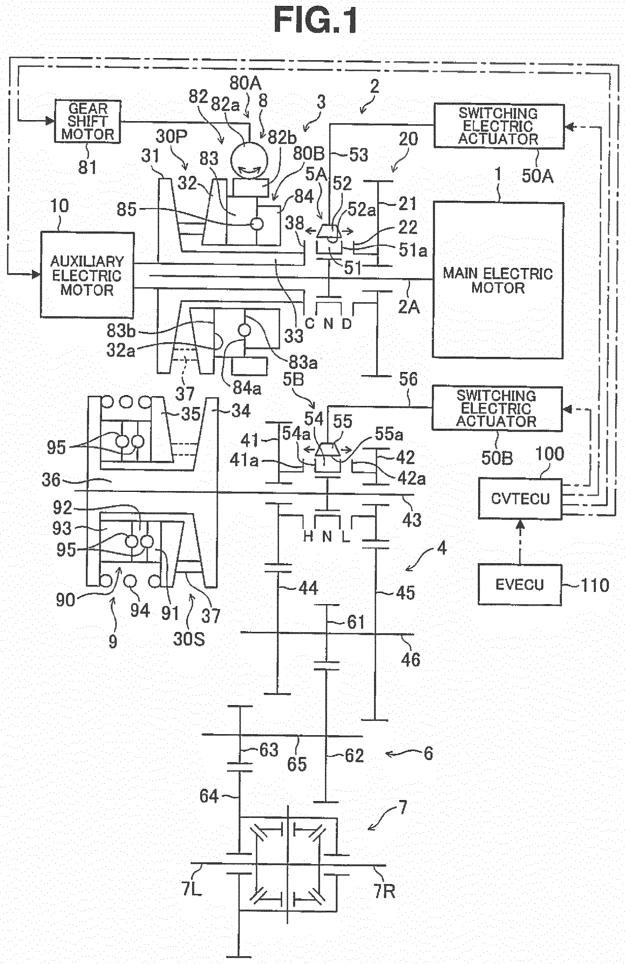

FIG. 1 is a configuration view showing a main part of a driving system unit of a vehicle which is provided with an automatic transmission according to one embodiment of the present invention.

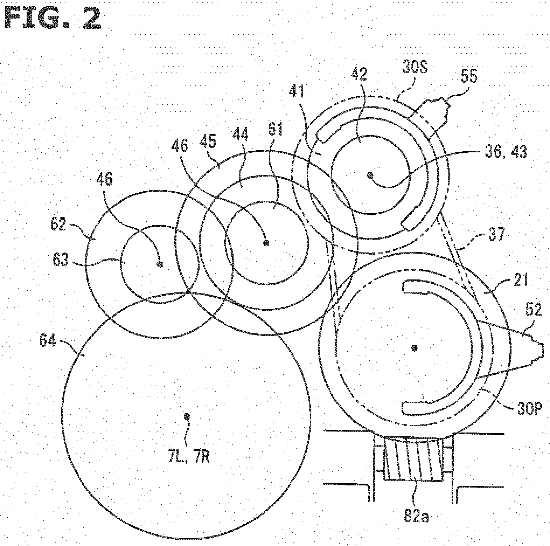

FIG. 2 is an axial disposition view showing the main part of the driving system unit of the vehicle which is provided with automatic transmission according to the one embodiment of the present invention.

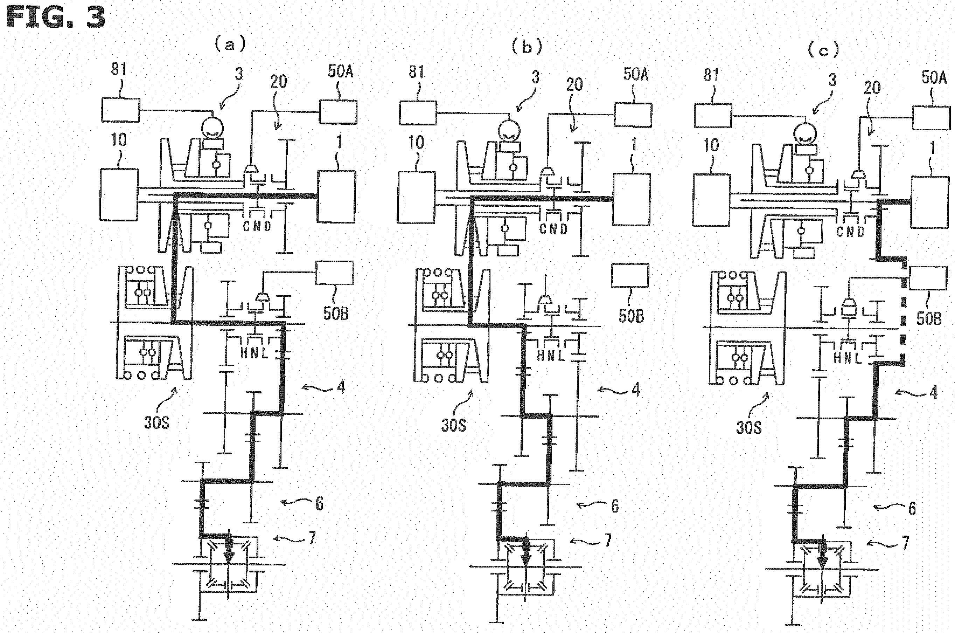

FIGS. 3 are views for illustrating a power transmitting mode of the driving system unit of the vehicle which is provided with the automatic transmission according to the one embodiment of the present invention. FIG. 3(a) shows a CVT low mode. FIG. 3(b) shows a CVT high mode. FIG. 3(c) shows a direct connection mode.

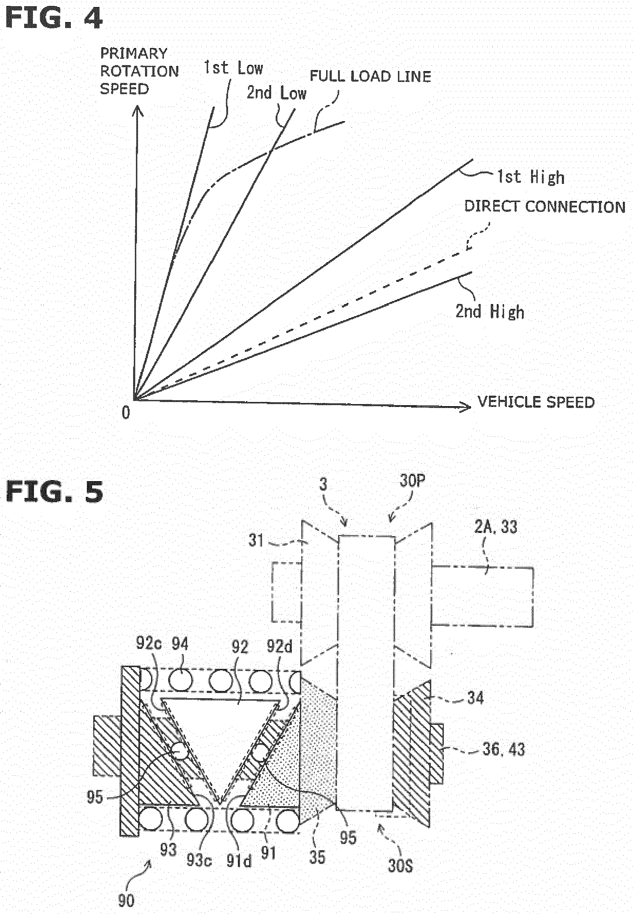

FIG. 4 is a view showing one example of a shift map of the automatic transmission according to the embodiment of the present invention.

FIG. 5 is a schematic configuration view for illustrating a torque cam device according to the one embodiment of the present invention.

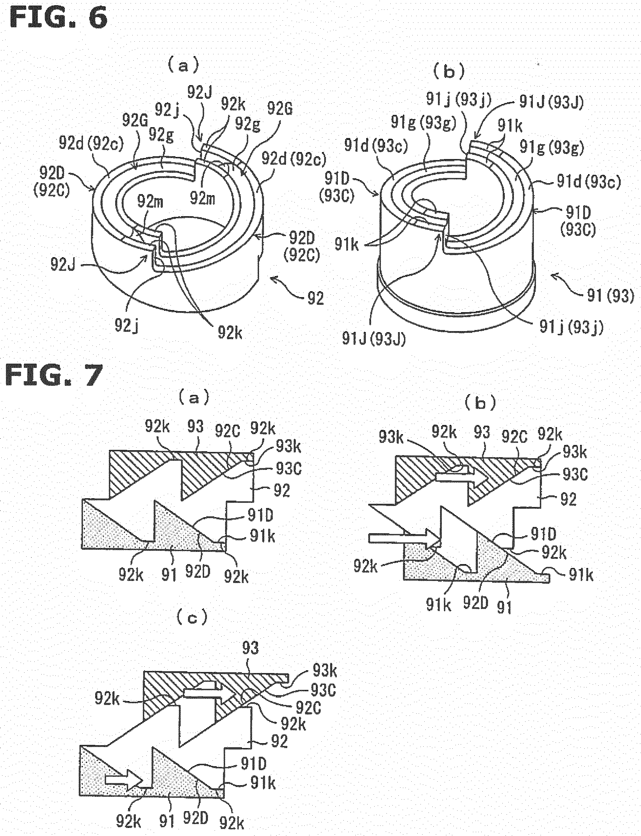

FIGS. 6 are perspective views showing cam members of the torque cam device according to the one embodiment of the present invention. FIG. 6A shows an intermediate cam member. FIG. 6B shows a drive cam member and a driven cam member.

FIGS. 7 are schematic circumferential views for illustrating actuation of the torque cam device according to the one embodiment of the present invention. FIG. 7(a) shows a state where the phases of the respective cam members correspond to each other. FIG.7(b) shows a state where a phase of the drive cam member is anteceded. FIG. 7(c) shows a state where the phase of the drive cam member is retarded.

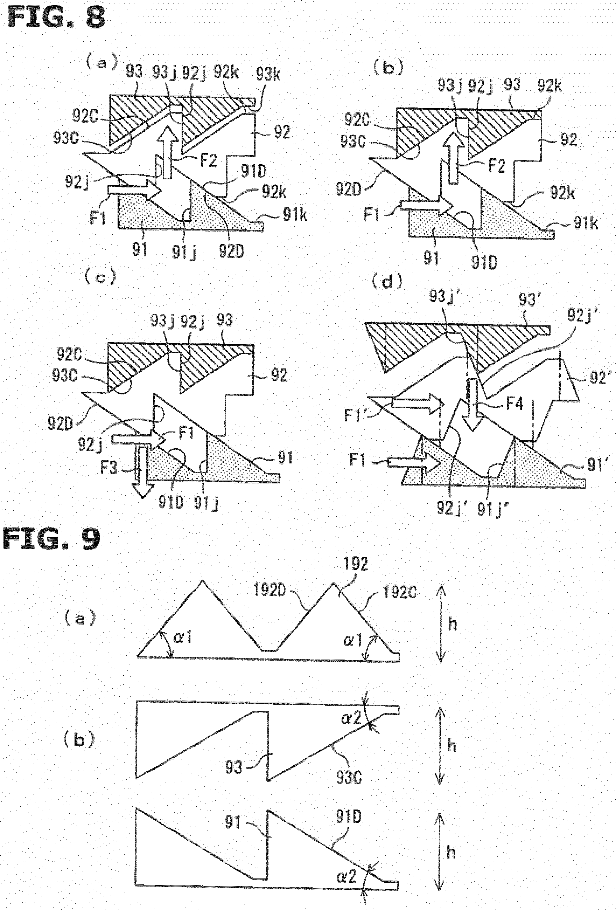

FIGS. 8 are schematic circumferential views for illustrating effects of the torque cam device according to the one embodiment of the present invention. FIGS. 8(a) to (c) show a process in which the phase of the drive cam member of the torque cam device according to the one embodiment is anteceded in this order. FIG. 8(d) shows a comparative example.

FIGS. 9 are schematic circumferential views for illustrating effects of the torque cam device according to the one embodiment of the present invention. FIG. 9(a) shows a cam member of the comparative example. FIG. 9(b) shows the cam member of the torque cam device according to the one embodiment.

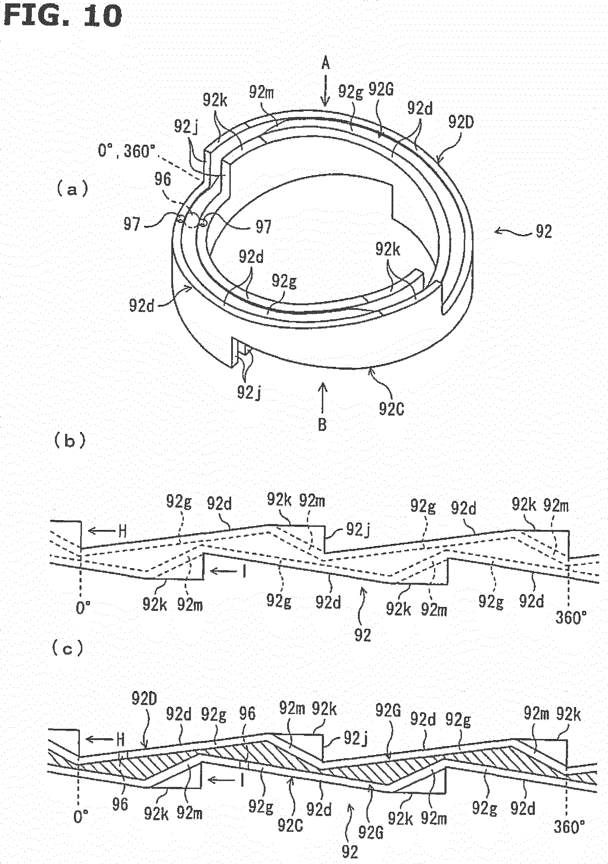

FIGS. 10 are views showing detail configurations of the cam member of the torque cam device according to the one embodiment of the present invention. FIG. 10(a) is a perspective view of the cam member. FIG. 10(b) is a developed view of an outer circumference surface of the cam member. FIG. 10(c) is a developed view of a section at a central portion of a guide groove of the cam member.

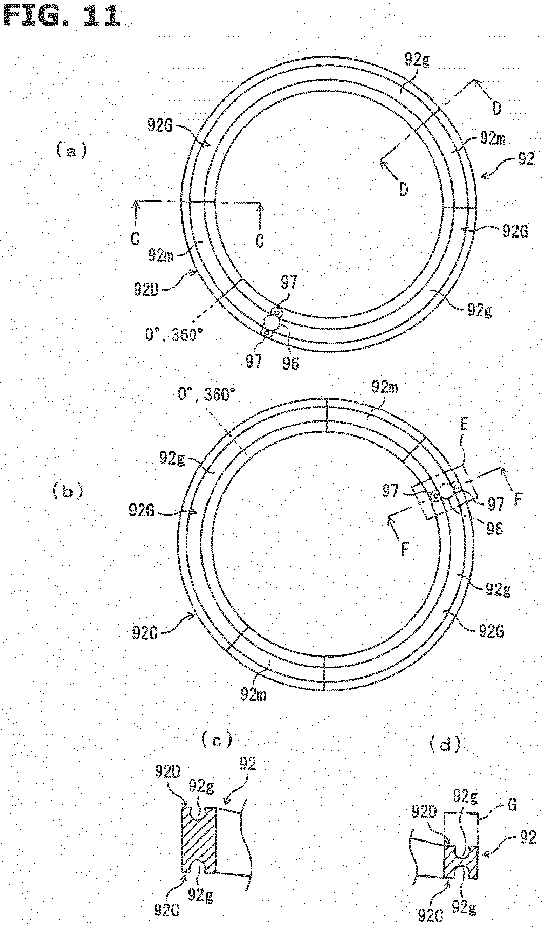

FIGS. 11 are views showing the cam member of the torque cam device according to the one embodiment of the present invention. FIG. 11(a) is a front view of the cam member (when viewed from an A arrow direction in FIG. 10(a)). FIG. 11(b) is a front view of the cam member (when viewed from a B arrow direction in FIG. 10(a)). FIG. 11(c) is a sectional view of a main portion of the cam member (which is taken along a C-C line in FIG. 11(a)). FIG. 11(d) is a sectional view of a main portion of the cam member (which is taken along a D-D line in FIG. 11(a)).

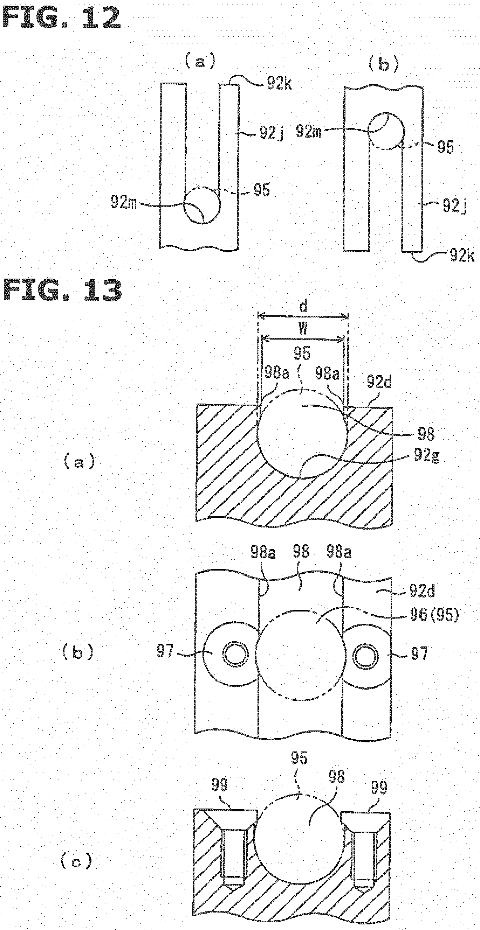

FIGS. 12 are enlarged views showing the main portion of the cam member of the torque cam device according to the one embodiment of the present invention. FIG. 12(a) is an enlarged view when viewed from an H arrow direction in FIGS. 10(b) and (c). FIG. 12(b) is an enlarged view when viewed from an I arrow direction in FIG. 10(b) and (c).

FIGS. 13 are enlarged views showing the main portion of the cam member of the torque cam device according to the one embodiment of the present invention. FIG. 13(a) is an enlarged view obtained by enlarging a G portion of FIG. 11(d). FIG. 13(b) is an enlarged view obtained by enlarging an E portion of FIG. 11(b). FIG. 13(c) is an enlarged sectional view taken along an F-F line in FIG. 11(b).

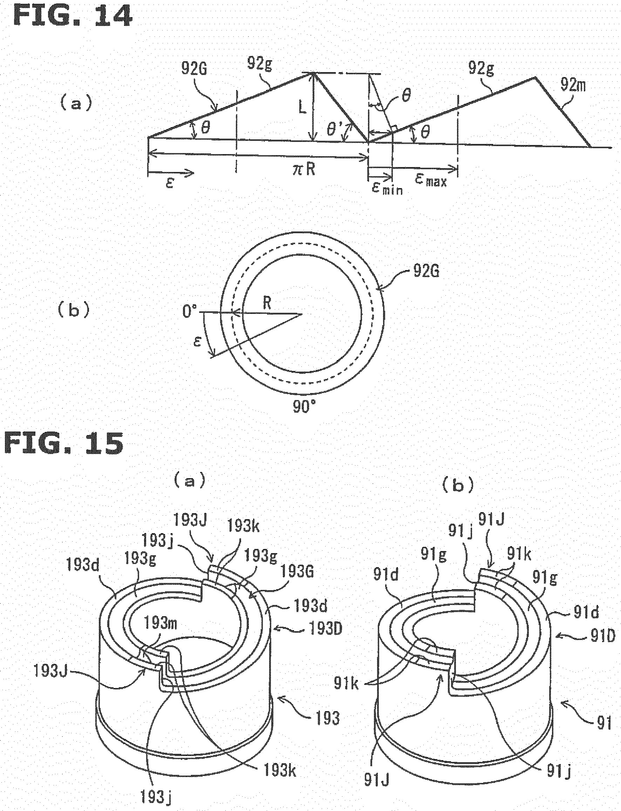

FIGS. 14 are views for explaining a disposition (arrangement) of an insertion diameter increasing portion of the cam member of the torque cam device according to the one embodiment of the present invention. FIG. 14(a) is a developed view showing an inclination of the guide groove thereof. FIG. 14(b) is a front view showing the guide groove thereof.

FIGS. 15 are perspective views showing the cam member of the torque cam device according to a variation of the one embodiment of the present invention. FIG. 15(a) shows a driven cam member. FIG. 15(b) shows a drive cam member.

FIGS. 16 are views showing a torque cam device of a conventional art relating to problems of the present invention. FIG. 16(a) is a perspective view showing a main part thereof. FIG. 16(b) is a view showing a movable stroke of a ball in a cam surface thereof.

## Description of Embodiments

Hereinafter, one embodiment of an automatic transmission for an electric vehicle which is according to the present invention is illustrated with reference to the drawings. Besides, the below-described embodiment are merely example. It is not intended to exclude various variations and applications of the art which are not described in the below-described embodiment. It is possible to implement by using a part of the embodiment, to implement by varying a part of the embodiment, and to implement by changing with other mechanisms and other devices having identical functions.

The electric vehicle according to the present invention (hereinafter, referred to merely as a vehicle) is an electric vehicle (called also as EV) which travels to use only an electric motor as a driving source. The electric vehicle according to the present invention does not include a hybrid vehicle which travels by selectively using the electric motor and an internal combustion engine as a driving source. Moreover, the present automatic transmission is disposed between the electric motor and driving wheels of the thus-constructed vehicle.

[Configuration of Driving System Unit]

First, a driving system unit of the vehicle is illustrated. As shown in FIG. 1 and FIG. 2, this driving system unit includes a main electric motor (called merely also as an electric motor) 1 which is a driving source of the vehicle; an automatic transmission 2 including a transmission input shaft (hereinafter, referred to as an input shaft) 2A which is integrally connected to an output shaft of the main electric motor 1; a speed reduction mechanism 6 connected to the automatic transmission 2; and a differential mechanism 7 connected to the speed reduction mechanism 6. Wheel shafts 7L and 7R are connected to left and right side gears of the differential mechanism 7. Driving wheels (not shown) are connected, respectively, to the wheel shafts 7L and 7R.

The automatic transmission 2 is a transmission which is constituted by adding a direct connection gear mechanism 20 to a belt type continuously variable transmission mechanism (CVT) with an auxiliary transmission mechanism. Moreover, the automatic transmission 2 includes a belt type continuously variable transmission mechanism (hereinafter, referred to also as a variator) 3 which includes a belt 37 for transmitting a power, and which includes a primary pulley (input portion) 30P that is disposed to be rotated relative to the input shaft 2A; a constantly meshed parallel shaft type gear transmission mechanism (hereinafter, referred to also as the auxiliary transmission mechanism) 4 which is connected to a rotation shaft 36 of a secondary pulley (output portion) 30S of this variator 3; and the direct connection gear mechanism 20 which is arranged to directly connect the input shaft 2A and the speed reduction mechanism 6 to avoid the variator 3 and the auxiliary transmission mechanism 4.

The variator 3 includes the primary pulley 30P including a fixed pulley 31 including a rotation shaft 33, and the movable pulley 32; a secondary pulley 30S including a fixed pulley 34 including the rotation shaft (output shaft) 36, and a movable pulley 35; and a belt 37 which is wound around V grooves of the primary pulley 30P and the secondary pulley 30S. The rotation shaft 33 of the fixed pulley 31 of the primary pulley 30P is disposed to be rotated relative to the input shaft 2A.

Besides, FIG. 1 shows the primary pulley (the pulley device) 30P, the secondary pulley (the pulley device) 30S, and the belt 37 of the variator 3 in states where a transmission gear ratio is a low side and a high side. The state of the low side is shown in half portions of respective outer sides (on a side on which the pulleys are apart from each other) of the primary pulley 30P and the secondary pulley 30S. The high side state is shown in half portions of respective inner sides (on a side on which the pulleys are near each other) of the primary pulley 30P and the secondary pulley 30S. The state of the low side of the belt 37 is schematically shown by a solid line. The state of the high side of the belt 37 is shown schematically shown by a two dot chain line. Besides, the high state shown by the two dot chain line shows only a position relationship of the radial direction of the pulley and the belt. An actual belt position does not appears in the half portion of the inner side of the pulley.

An electric actuator 80A and a mechanical reaction force mechanism perform an adjustment of the transmission gear ratio, and an adjustment of a pulley thrust (referred to merely as a thrust), that is, an adjustment of a belt clamping force, by varying belt winding radii of the primary pulley 30P and the secondary pulley 30S of this variator 3. A torque cam mechanism is used as the mechanical reaction force mechanism. This torque cam mechanism is constituted by a pair of cam members which have annular shapes, and which have cam surfaces that are positioned at end portions, and that are inclined in helical (spiral) shapes. These torque cam mechanisms are coaxially disposed so that the respective cam surfaces are slidably abutted on each other. The pair of the cam members are arranged to be moved closer to or away from each other in the axial direction in accordance with the relative rotation of the pair of the cam members, so that an entire length of the pair of the cam members is varied. With this, the torque cam mechanism is arranged to adjust the thrust of the rotation member (pulleys 30P and 30S) which is pressed and abutted on one of the cam members.

In this case, the torque cam mechanisms are used as the mechanical reaction force mechanism in both of the primary pulley 30P and the secondary pulley 30S. With this, the ball torque cam mechanisms of the both pulleys are acted as the reaction forces of the forces which are generated by the belt 37 to push the primary pulley 30P and the secondary pulley 30S (the force that separates the pulleys). With this, the thrusts according to the transmitting torques of the belt 37 are generated in the both pulleys 30P and 30S without using hydraulic pressure and so on.

Moreover, the primary pulley 30P is provided with the electric actuator 80A which actively drives to rotate one of the pair of the cam members. The primary pulley 30P is constituted so as to adjust the groove width of the V groove of the primary pulley 30P by varying the entire length of the pair of the cam members. Besides, in this embodiment, the respective torque cam mechanisms employ ball torque cam mechanisms in which slidably abutting portions of the respective cam surfaces are point contacts through the balls.

In this way, the primary pulley 30P is provided with by the torque cam mechanism which is the mechanical reaction force mechanism, and the electric actuator 80A arranged to drive to rotate one of the pair of the cam members. The torque cam mechanism and the electric actuator 80A are arranged to vary the entire length of the pair of the cam members, to adjust the groove width of the V groove of the primary pulley 30P, and thereby to adjust the transmission gear ratio. Moreover, The torque cam mechanism and the electric actuator 80A are arranged to adjust the belt clamping force by adjusting the thrust of the pulley 30P. Accordingly, the mechanism constituted by the electric actuator 80A and the torque cam mechanism of the primary pulley 30P is also referred to as a shift mechanism 8. On the other hand, the torque cam mechanism of the secondary pulley 30S is also referred to as a thrust generating mechanism 9 since the torque cam mechanism of the secondary pulley 30S generates the thrust of the secondary pulley 30S. Details of these shift mechanism 8 and the thrust generating mechanism 9 will be illustrated later.

The auxiliary transmission mechanism 4 has a plurality of gear stages (shift stages) (in this case, two stages of the High and the Low). The auxiliary transmission mechanism 4 includes gears 41 and 42 which are provided to be rotated relative to a rotation shaft 43 which is integral coaxially with the rotation shaft 36 of the secondary pulley 30S of the variator 3; and gears 44 and 45 which are disposed and fixed on a rotation shaft 46 parallel to the rotation shaft 43 so as to rotate as a unit with the rotation shaft 46. The gear 41 and the gear 44 are constantly engaged with each other. The gear 41 and the gear 44 constitute a second speed (High) gear stage. The gear 42 and the gear 45 are constantly engaged with each other. The gear 42 and the gear 45 constitute a first speed (Low) gear stage.

The auxiliary transmission mechanism 4 is provided with an engagement clutch mechanism 5B of three position type which is arranged to selectively switch the second speed gear stage and the first speed gear stage. The engagement clutch mechanism 5B includes a clutch hub 54 arranged to rotate as a unit with the rotation shaft 43; a sleeve 55 having an internal teeth 55a which is spline-engaged with an external teeth 54a provided to the clutch hub 54; a shift folk 56 arranged to move the sleeve 55 in a shift direction (an axial direction); and a switching electric actuator 50B which is arranged to drive the shift folk 56.

The gear 41 is provided with an external teeth 41a arranged to be engaged with the internal teeth 55a of the sleeve 55. The gear 42 is provided with an external teeth 42a arranged to be engaged with the internal teeth 55a of the sleeve 55.

The sleeve 55 has respective positions of a neutral position (N), a second speed position (H) setting the second speed (High) gear stage, and a first speed position (L) setting the first speed (Low) gear stage. The sleeve 55 is driven to be slid among the respective positions by the shift folk 56.

By moving the sleeve 55 toward the gear 41's side (that is, the second speed position) by driving the shift folk 56 by the electric actuator 50B, the internal teeth 55a of the sleeve 55 is engaged with the external teeth 41a of the gear 41. With this, the rotation shaft 43 and the gear 41 rotate as a unit with each other, so that the second speed gear stage is set. When the second speed gear stage is set, the power is transmitted from the rotation shaft 36 of the secondary pulley 30S of the variator 3 (that is, the rotation shaft 43) through the gear 41, the gear 44, and the rotation shaft 46 to the speed reduction mechanism 6.

By moving the sleeve 55 toward the gear 42's side (that is, the first speed position) by driving the shift folk 56 by the electric actuator 50B, the internal teeth 55a of the sleeve 55 is engaged with the external teeth 42a of the gear 42. With this, the rotation shaft 43 and the gear 42 rotate as a unit with each other, so that the first speed gear stage is set. When the first speed gear stage is set, the power is transmitted from the rotation shaft 36 of the secondary pulley 30S of the variator 3 (that is, the rotation shaft 43) through the gear 42, the gear 45, and the rotation shaft 46 to the speed reduction mechanism 6.

Besides, a rotation synchronous control described later is performed for smoothly engaging the internal teeth 55a of the sleeve 55 with the external teeth 41a of the gear 41 and the external teeth 42a of the gear 42. Accordingly, a synchronous mechanism is not needed at an engaging portion. There is not provided the synchronous mechanism.

The direct connection gear mechanism 20 includes an input gear (an input gear) 21 disposed to be rotated relative to the input shaft 2A. As shown in FIG. 2, this input gear 21 is engaged and drivingly connected with one of the plurality of the shift gears of the auxiliary transmission mechanism (in this case, the gear 45 which is the output side gear of the first speed stage).

Besides, teeth numbers of the input gear 21 and the gear 45 are set substantially identical to each other so that the transmission gear ratio becomes substantially 1.0.

For selectively using this direct connection gear mechanism 20 and the variator 3, there is provided an engaging (meshing) clutch mechanism 5A of 3 position type. As shown in FIG. 1, the engaging clutch mechanism 5A has a configuration identical to the engaging clutch mechanism 5B. The engaging clutch mechanism 5A includes a clutch hub 51 arranged to rotate as a unit with the input shaft 2A; a sleeve 52 including an internal teeth 52a which is spline-engaged with an external teeth 51a provided to the clutch hub 51; a shift folk 53 arranged to move the sleeve 52 in a shift direction (an axial direction); and a switching electric actuator 50A arranged to drive the shift folk 53.

The input gear 21 is provided with an external teeth 22 arranged to be engaged with the internal teeth 52a of the sleeve 52. The rotation shaft 33 of the fixed pulley 31 of the primary pulley 30P of the variator 3 is provided with an external teeth 38 which is arranged to be engaged with the internal teeth 52a of the sleeve 52.

The sleeve 52 has respective positions of a neutral position (N), a CVT position (C) setting a power transmitting path passing through the variator 3, and a direct connection position (D) setting the power transmitting path passing through the direct connection gear mechanism 20. The sleeve 52 is driven to be slid among the respective positions by the shift folk 53.

By moving the sleeve 52 toward the rotation shaft 33's side by driving the shift folk 53 by the electric actuator 50A, the internal teeth 52a of the sleeve 52 is engaged with the external teeth 38 of the rotation shaft 33. With this, the input shaft 2A and the fixed pulley 31 of the primary pulley 30P rotate as a unit with each other, so that the power transmitting path passing through the variator 3 is set.

By moving the sleeve 52 toward the input gear 21's side by driving the shift folk 53 by the electric actuator 50A, the internal teeth 52a of the sleeve 52 is engaged with the external teeth 22 of the input gear 21. The input shaft 2A and the input gear 21 rotate as a unit with each other, so that the power transmitting path passing through the direct connection gear mechanism 20 is set.

In this case, a rotation synchronous control described later is performed for smoothly engaging the internal teeth 52a of the sleeve 52 with the external teeth 38 of the rotation shaft 33 and the external teeth 22 of the input gear 2. Accordingly, the synchronous mechanism is not needed at an engaging portion. There is not provided the synchronous mechanism.

Besides, in this embodiment, the both engaging clutch mechanisms 5A and 5B are not provided with the synchronous mechanism since the synchronous rotation control is performed as described above. However, in a case where there is provided the synchronous mechanism, it is possible to obtain an effect to further promote the synchronism. Moreover, in a case where the rotation synchronism control is not performed, the synchronous mechanism is needed.

The speed reduction mechanism 6 includes a gear 61 disposed and fixed on the rotation shaft 46 of the auxiliary transmission mechanism 4 to rotate as a unit with the rotation shaft 46 of the auxiliary transmission mechanism 4; a gear 62 which is disposed and fixed on a rotation shaft 65 that is parallel to the rotation shaft 46 to rotate as a unit with the rotation shaft 65, and which is engaged with the gear 61; a gear 63 disposed and fixed on the rotation shaft 65 to rotate as a unit with the rotation shaft 65; and a gear 64 which is an input gear of the differential mechanism 7, and which is engaged with the gear 63. The speed is reduced between the gear 61 and the gear 62 in accordance with that gear ratio. Moreover, the speed is reduced between the gear 63 and the gear 64 in accordance with that gear ratio.

[Thrust Generating Mechanism (Mechanical Reaction Force Mechanism)]

Hereinafter, a thrust generating mechanism 9 which is one of the mechanical reaction force generating mechanisms, and which is provided to the secondary pulley 30S is illustrated. As described above, this thrust generating mechanism 9 employs the torque cam mechanism. The employed torque cam mechanism (the torque cam device) 90 is illustrated with reference to FIG. 5 to FIG. 9.

In this embodiment, as shown in FIG. 5, the torque cam mechanism 90 is an end cam. The torque cam mechanism 90 includes three cam members of a drive cam member 91 which is disposed and fixed on a back surface of the movable pulley 35; a driven cam member 93 which is disposed and fixed on the rotation shaft 36 of the fixed pulley 34, and which is adjacent to the drive cam member 91; and an intermediate (middle) cam member 92 which is disposed between the drive cam member 91 and the driven cam member 93, which is disposed coaxially with the drive cam member 91 and the driven cam member 93, and which is arranged to be rotated relative to the cam members 91 and 93. The drive cam member 91 drives the driven cam member 93 at the drive running (the drive travel) of the vehicle. The driven cam member 93 drives the drive cam member 91 at the coast running (the driven running, or the driven travel) of the vehicle. In this way, in this embodiment, the torque cam mechanism 90 is constituted by three cam members. However, in the present invention, the intermediate cam member 92 is optional to the torque cam mechanism 90. Accordingly, the present invention is applicable to a torque cam mechanism which does not have the intermediate cam member 92.

As shown by a perspective view of FIG. 6(b), the drive cam member 91 is a cylindrical (or annular) member. The drive cam member 91 includes a first drive cam surface 91D which is an annular shape, and which is provided on one end side, and the other end side which is disposed and fixed on the back surface of the movable pulley 35. An entire annular circumference of the annular first drive cam surface 91D is equally divided into two. The respective first drive cam surfaces 91D have helical curved surfaces 91d according to predetermined cam angles. Connection portions 91J are formed, respectively, between the first drive cam surfaces 91D divided into two. Each of the connection portions 91J includes a connection surface (first connection surface) 91j which is formed into a stepped shape from an end portion of one of the helical curved surfaces 91d, and which extends in the axial direction; and a second connection surface 91k connecting an end portion of the connection surface 91j, and an end portion of the other of the helical curved surfaces 91d. Each of the connection surface 91j is formed in an axial direction (a direction parallel to the rotation axis) along the rotation axis of the drive cam member 91. Each of the second connection surfaces 91k is a surface perpendicular to the axial direction of drive cam member 91.

The driven cam member 93 has a shape which is symmetrical to the drive cam member 91, and which is obtained by inverting (reversing) the perspective view of FIG. 6(b). The driven cam member 93 is explained by using the perspective view of FIG. 6(b). The driven cam member 93 includes a first driven cam surface 93C which is an annular shape, and which is provided on one end side, and the other end side fixed on the rotation shaft 36. An entire annular circumference of the annular first driven cam surface 93C is equally divided into two. The respective first driven cam surfaces 93C have helical curved surfaces 93c according to predetermined cam angles. Connection portions 93J are formed, respectively, between the first driven cam surfaces 93C equally divided into two. Each of the connection portions 93J includes a connection surface (first connection surface) 93j which is formed into a stepped shape from an end portion of one of the helical curved surfaces 93c, and which extends in the axial direction; and a second connection surface 93k connecting an end portion of the connection surface 93j, and an end portion of the other the helical curved surfaces 93c. Each of the connection surface 93j is formed in an axial line direction (a direction parallel to the rotation axis) along the rotation axis of the driven cam member 93. Each of the connection surfaces 93j is formed in the axial direction of the driven cam member 93. Each of the second connection surface 93k is a surface perpendicular to the axial direction of the driven cam member 93.

As shown in the perspective view of FIG. 6(a), the intermediate cam member 92 is a cylindrical (or annular) member. The intermediate cam member 92 includes a second driven cam surface 92D which is an annular shape, which is positioned on one end side, and which confronts the first drive cam surface 91D of the drive cam member 91; and a second drive cam surface 92C which is an annular shape, which is positioned on the other end side, and which confronts the first driven cam surface 93C of the driven cam member 93. The intermediate cam member 92 serves as a driven cam member with respect to the drive cam member 91. The intermediate cam member 92 serves as a drive cam member with respect to the driven cam member 93. As shown in FIG. 6(a), an entire annular circumference of the annular second driven cam surface 92D is equally divided into two. The respective second driven cam surfaces 92D include helical curved surfaces 92d according to a predetermined cam angle. Connection portions 92J are formed, respectively, between the first drive cam surfaces 92D equally divided into two. Each of the connection portion 92J includes a connection surface (first connection surface) 92j which is formed in a stepped shape from an end portion of one of the helical curved surfaces 92d, and which extends in the axial direction; and a second connection surface 92k connecting an end portion of the connection surface 92j and an end portion the other of the helical curved surfaces 92d. Each of the connection surfaces 92j is also formed in the axial direction of the intermediate cam member 92. Each of the second connection surfaces 92k is a surface perpendicular to the axial direction.

An annular second drive cam surface 92C has a shape which is symmetrical to the second driven cam surface 92D, and which is obtained by inverting the perspective view of FIG. 6(a). An entire annular circumference of the second driven cam surface 92C is equally divided into two. The respective first driven cam surfaces 92C have helical curved surfaces 92c according to predetermined cam angles. Connection portions 92J are formed, respectively, between the first driven cam surfaces 92C equally divided into two. Each of the connection portions 92J includes a first connection surface 92j which is formed into a stepped shape from an end portion of one of the helical curved surfaces 92d, and which extends in the axial direction; and a second connection surface 92k connecting an end portion of the first connection surface 92j, and an end portion of the other of the helical curved surfaces 92d. Each of the first connection surface connection surfaces 92j is formed in an axial direction of the intermediate cam member 92. Each of the second connection surfaces 92k is a surface perpendicular to the axial direction of the intermediate cam member 92.

Accordingly, in a case where the helical curved surfaces 91d and 92d of the first drive cam surface 91D and the second driven cam surface 92D are helical shapes of the right-hand screws, the helical curved surfaces of the first driven cam surface 93C and the second drive cam surface 92C are helical shapes of the left-handed screws.

Moreover, the second driven cam surface 92D and the second drive cam surface 92C of the intermediate cam member 92 are formed to have a phase shift in the rotation direction. That is, the first connection surface 92j connecting the two second driven cam surfaces 92D, and the first connection surfaces 92j connecting the two second drive cam surfaces 92C are disposed and formed so that the phases are deviated (shifted) from each other in the rotation direction. The phase shift of the cam surfaces 92D and 92C can be at most 90 degrees. With this, it is possible to decrease the axial length of the intermediate cam member 92.

The second driven cam surface 92D of the intermediate cam member 92 is arranged to be abutted on the first drive cam surface 91D of the drive cam member 91. The second drive cam surface 92C of the intermediate cam member 92 is arranged to be abutted on the first driven cam surface 93C of the driven cam member 93. Besides, the balls (steel balls) 95 are disposed, respectively, between the both drive cam surfaces 91D and 92D, and between the both driven cam surfaces 93C and 92C. The torque cam mechanism 90 is constituted as a ball torque cam device.

Accordingly, the helical curved surfaces of the first drive cam surface 91D of the drive cam member 91, the second driven cam surface 92D and the second drive cam surface 92C of the intermediate cam member 92, and the first driven cam surface 93C of the driven cam member 93 include, respectively, grooves (guide grooves) 91g, 92G, and 93g which have arc sections, and which receive the balls 95. With this, portions between the respective drive cam surfaces 91D and 92C, between the driven cam surfaces 93D and 92C are smoothly slid by point contacts by the balls 95.

Besides, in this embodiment, each of the grooves 92G of the second drive cam surface 92D and the second drive cam surface 92C of the intermediate cam member 92 is a guide groove (deep groove) which receives a portion of each of the balls 95 which is larger than a half portion of the each of the balls 95. Each of the grooves 91g and 93g of the first drive cam surface 91D of the drive cam member 91 and the first driven cam surface 93C of the driven cam member 93 is a shallow groove (in this case, a partially arc section) on which protruding top portions of the balls 95 received within one of the grooves 92G is slidably abutted.

The configuration in which the balls 95 are received within the grooves 92G is explained with reference to FIG. 10 to FIG. 13.

As shown in FIG. 10, each of the grooves 92G of the intermediate cam member 92 incudes helical groove portions 92g each formed into a helical shape along one of the helical curved surfaces 92d and 92c of the second driven cam surface 92D and the second drive cam surface 92C of the intermediate cam member 92; and connection groove portions 92m each of which is formed between these helical groove portions 92g, and each of which smoothly connects the helical groove portions 92g. Each of the connection groove portions 92m is formed into a partially helical shape inclined in a direction opposite to the helical groove portion 92g in the circumferential direction. Each of the connection groove portions 92m and one of the helical groove portions 92g are connected by a smooth curve. Accordingly, the groove 92G is continuous around the entire circumference by the helical groove portions 92g and the connection groove portions 92m. The groove 92G is arranged to guide the movement of the ball 95 around the entire circumference.

The plurality of the balls 95 are received to be rolled within the groove 92G while the balls 95 are slidably contacted with each other in a series state. Accordingly, even in a case where the torque transmitting direction between the drive cam member 91 and the driven cam member 93 are switched like the coast traveling, that is, even in a case where the drive actuation and the driven actuation of the cam members 91 and 93 are switched, the balls 95 within the groove 92G are difficult to be influenced by this switching. Beside, a lubricant oil is supplied into the groove 92G, so that the rolling movements of the balls 95 within the groove 92G are extremely smoothly performed.

As shown in FIG. 11 to FIG. 13, the groove 92G is formed into a partially circular shape having a sectional area greater than that of a semicircle. The groove 92G is arranged to hold the balls 95, and to restrict the detachment (separation) of the balls 95. That is, as shown in FIG. 13, the groove 92G includes an opening portion 98 which is formed on the helical groove portion 92g, and from which a part of each of the balls 95 can protrude from the helical curved surface 92d. The groove 92G receives a portion greater than the half portion (lower half portion in FIG. 13) of the ball 95.

Moreover, the opening portion 98 includes overhang portions 98a and 98a which are located at both edge portions of the opening portion 98, and which confront each other. A length between the overhang portions 98a and 98a, that is, an opening width w of the opening portion 98 is smaller than an outside diameter d of each of the balls 95. With this, the balls 95 are held, and the detachment (separation) of the balls 95 are restricted. Besides, the cross sectional area of the helical groove portion 92g is formed into a partially circular shape having an inside diameter slightly greater than an outside diameter of the outside diameter d of each of the balls 95.

Moreover, as shown in FIGS. 11(a) and (b) and FIGS. 13 (b) and (c), an insertion diameter increasing portion 96 is formed in a portion of the opening portion 98, for inserting the balls 9 into the groove 92G of the opening portion 98 smaller than the outside diameter of each of the balls 95. The insertion diameter increasing portion 96 has a diameter greater than the outside diameter d of each of the balls 95. With this, it is possible to insert the balls 9 from the insertion diameter increasing portion 96 into the groove 92G.

This insertion diameter increasing portion 96 includes a detachment (separation) preventing portion arranged to prevent the detachment (separation) of the inserted balls 95 from the groove 92G. The detachment preventing portion in this embodiment is screw members 99 inserted to close the diameter increasing portion of the insertion diameter increasing portion 96. That is, screw holes 97 are processed on both side portions of the insertion diameter increasing portion 96. After all of the balls 95 are inserted, the screw members 99 are tightened to the respective screw holes 97. Each of head portions of the screw members 99 includes a portion formed into the same sectional shape as the overhang portions 98a. After the screw members 99 are tightened, the portion of the head portion of the screw member 99 becomes the same sectional shapes as the overhang portions 98a and 98a in the section of the insertion diameter increasing portion 96. It prevents the detachment (separation) of the balls 95 after the insertion from the inside 92G. Moreover, it does not interrupt the smooth rolling movements of the balls 95 within the groove 92G. Besides, the detachment preventing portion is not limited to the screw members 99. For example, the cam surface 92d at the insertion diameter increasing portion 96 is formed to have a large thickness in an outward direction (in the upward direction of FIG. 13(a)). After the insertion of the all of the balls 95, this large thickness portion may be caulked from the outside so as to have the same shape as the overhang portions 98a.

Incidentally, the insertion diameter increasing portion 96 is formed at a portion of the helical curved surface 92d which has an axially protruding amount equal to or smaller than half. That is, each of the helical curved surfaces 92d protrudes in the axial direction in accordance with the phase angle. For example, a portion in which the axially protruding amount is equal to or smaller than a half of an entire protruding amount is referred to as a valley side of the helical curved surface 92d. A portion in which the axially protruding amount is greater than the half of the entire protruding amount is referred to as a mountain side of the helical curved surface 92d. The insertion diameter increasing portion 96 is formed on this valley side (cf. FIG. 10).

These reasons are explained in the following. In case of the valley side of the helical curved shape 92d, the slidably abutting region becomes long with respect to the cam surfaces 91D and 93C of the confronting cam members 91 and 93, so that more balls 95 are abutted on the both cam surfaces 91D and 92D or 92C and 93C. Accordingly, the stress is dispersed at the portion (a valley portion) on the valley side of the helical curved surface 92d. With this, it is possible to relieve (decrease) the stress added at the insertion diameter increasing portion 96 and a portion around the insertion diameter increasing portion 96 which are easy to cause the stress concentration, and thereby to improve the durability.

FIG. 14(a) is a deployed view schematically showing an inclination state of the groove 92G. FIG. 14(b) is a plan view showing the groove 92G. A cam angle θ shown in FIG. 14(a) is as follows, where a cam groove center radius is R [cf. FIG. 14(a)], a necessary stroke of the cam mechanism is L, and a circulation cam return angle of the connection groove portion 92 shown in FIG. 14(a) is θ', when it is presumed that the entire of the helical groove portion 92g of the groove 92G serves for (contributes to) the stroke of the cam mechanism.

$$\theta = \tan^{-1}[L/(\pi R - L/\tan\theta')]$$

In this case, for example, when R = 40 (mm), L = 20 (mm), and θ' = 45 (deg) are presumed,

$$\theta = 10.7 \ (deg)$$

Incidentally, in a case where the insertion diameter increasing portion 39 is positioned at ε degrees from 0 degrees which is a rising start point of the helical groove portion 92g as shown in FIG. 14(b), a physical lower limit $\varepsilon_{min}$

of $\varepsilon$ is represented by a follow equation (a).

$$\varepsilon_{min} = (L \times \sin \theta \times \cos \theta) \times 360/ (2 \times \pi \times R) \cdots (a)$$

However, for example, when a length which is approximately 3 times longer than the physical lower limit $\varepsilon_{min}$ is set to a practical lower limit $\varepsilon_{minr}$ of $\varepsilon$ for preventing the interference of the tools at the cam groove processing, by considering the variations of the equipment and the diameters of the tools for processing the cam groove, and by considering the processing by the tools in a direction perpendicular to the cam surface, the practical lower limit $\varepsilon_{minr}$ is represented by a following equation (b).

$$\varepsilon_{minr} = (L \times \sin \theta \times \cos \theta \times 3) \times 360/ (2 \times \pi \times R) \cdots (b)$$

Moreover, in a case where an upper limit $\varepsilon_{max}$ of $\varepsilon$ is set so that the insertion diameter increasing portion 96 is provided in the valley portion on the lower side of the half of the inclination surface (the helical curved surface 92d) of the cam, the upper limit $\varepsilon_{max}$ is represented by a following equation (c).

$$\varepsilon_{max} = (2 \times \pi \times R/n) - L/\tan \theta') \times 360/ (4 \times \pi \times R) \cdots (c)$$

where n is a number of the cam ridges (profiles).

Accordingly, a range (deg) of $\varepsilon$ is represented by a following equation (d).

$$\varepsilon_{minr} < \varepsilon < \varepsilon_{max} \cdots (d)$$

In this case, for example, R = 40 (mm), L = 20 (mm), $\theta'$ = 45 (deg), and n = 2 are presumed, the range (deg) of $\varepsilon$ is represented a by a following equation (e).

$$15.70 \ (deg) < \varepsilon < 75.68 \ (deg) \cdots (e)$$

That is, in a case where the insertion diameter increasing portion 96 is positioned in this range, it is possible to surely prevent the interference of the tools at the downward motion on the lower limit side, to suppress the concentration of the stress to the members around the insertion opening on the upper limit side, and thereby to improve the durability.

In this case, the length which is approximately 3 times longer than the physical lower limit $\varepsilon_{min}$ is set to the practical lower limit $\varepsilon_{minr}$ of $\varepsilon$ (the lower limit value for preventing the interference of the tools). However, the lower limit $\varepsilon_{minr}$ is not limited to this. The lower limit $\varepsilon_{minr}$ may be set by adding a predetermined amount based on an insertion region of the tools to the lower limit $\varepsilon_{min}$.

Operation mechanisms of this torque cam mechanism 90 are illustrated in detail.

In a case where the drive cam member 91 and the driven cam member 93 do not have the phase shift, the first drive cam surface 91D of the drive cam member 91 and the second driven cam surface 92D of the intermediate cam member 92 are meshed with each other, and the first driven cam surface 93C of the driven cam member 93 and the second drive cam surface 92C of the intermediate cam member 92 are meshed with each other. With this, the total axial length of the drive cam member 91, the intermediate cam member 92, and the driven cam member 93, that is, the total length of the torque cam mechanism 90 becomes minimum. In this case, the groove width of the V groove of the secondary pulley 30S becomes maximum, so that the transmission gear ratio of the variator 3 becomes highest.

In the variator 3, when the input torque transmitted from the belt 37 to the secondary pulley 30S is increased at the drive traveling of the vehicle, the belt clamping force of the secondary pulley 30S becomes deficient, so that the fixed pulley 34 of the secondary pulley 30S is slid with respect to the belt 37. Besides, the movable pulley 35 arranged to be rotated relative to the rotation shaft 36 is moved to follow the belt 37. Accordingly, the phase delay of the fixed pulley 34 with respect to the movable pulley 35 is generated.

In this case, the drive cam member 91 fixed to the movable pulley 35 is relatively rotated to antecede (precede) the intermediate cam member 92 and the driven cam member 93 fixed to the fixed pulley 34 while sliding the portions between the drive cam surface 91D and the driven cam surface 92D through the balls 95, as shown FIG. 7(b), and moved to be separated from the driven cam member 93 and the intermediate cam member 92 in the axial direction so that the movable pulley 35 is moved closer to the fixed pulley 34. Consequently, the groove width of the V groove of the secondary pulley 30S is decreased, so that the thrust of the pulley 30S is increased. Therefore, the belt clamping force is increased, so that the slippage of the fixed pulley 34 is dissolved.

Contrarily to this, in a state where the driving source operates (generates) a negative input torque (braking torque) at the coast traveling of the vehicle, the delay of the rotation phase of the fixed pulley 34 is dissolved. When the belt clamping force of the secondary pulley 30S becomes deficient with respect to the negative input force, the antecedence (precedence) of the rotational phase of the fixed pulley 34 with respect to the movable pulley 35 is generated (conversely, the delay of the rotational phase of the movable pulley 35 with respect to the fixed pulley 34 is generated).

In this case, the driven cam member 93 fixed to the fixed pulley 34 is relatively rotated to antecede (precede) the intermediate cam member 92 and the drive cam member 91 fixed to the movable pulley 35 while sliding the portions between the driven cam surface 93C and the drive cam surface 92C through the balls 95, as shown in FIG. 7(c), and moved to be separated from the drive cam member 91 and the intermediate cam member 92 in the axial direction so that the movable pulley 35 is moved closer to the fixed pulley 34. With this, the groove width of the V groove of the secondary pulley 30S is decreased, so that the thrust of the pulley 30S is increased. Accordingly, the belt clamping force is increased, so that the slippage of the fixed pulley 34 is dissolved.

Besides, the driving torque and the braking torque are not acted, at the stop and so on of the vehicle. Accordingly, the thrust of the pulley by the torque cam mechanism 90 is not added. Accordingly, there is provided a coil spring 94 arranged to urge the movable pulley 35 in a direction to be closer to the fixed pulley 34, so as to prevent the belt slippage and to surely clamp the belt 37 in the initial driving state such as the start of the vehicle.


[Shift Mechanism]

As shown in FIG. 1, the shift mechanism 8 provided to the primary pulley 30P is constituted by the electric actuator 80A and the mechanical reaction force mechanism 80B. In this embodiment, the torque cam mechanism is employed as the mechanical reaction force mechanism 80B.

The torque cam mechanism employed in the mechanical reaction force mechanism 80B is disposed behind the movable pulley 32 of the primary pulley 30P. The torque cam mechanism includes a pair of cam members 83 and 84 coaxially disposed on the rotation shaft 33. The cam members 83 and 84 include, respectively, helical cam surfaces 83a and 84a which are inclined with respect to a direction perpendicular to the rotation shaft 33. The pair of the cam members 83 and 84 are disposed so that the respective cam surfaces 83a and 84a are abutted on each other. Besides, in this case, the torque cam mechanism employs the ball torque cam mechanism in which balls (steel balls 85) is disposed between the cam surfaces 83a and 84a that are slidalby abutted on each other, and in which the sildably abutting portions are the point contacts by the balls 85. The cam surfaces 83a and 84a are smoothly slid with each other.

The cam member 83 and the cam member 84 can be rotated relative to the rotation shaft 33. The cam member 83 and the cam member 84 are disposed coaxially with the rotation shaft 33 independently of the fixed pulley 31 and the movable pulley 32 of the primary pulley 30P. That is, the cam members 83 and 84 are not rotated even when the primary pulley 30P is rotated. Besides, the cam member 84 is a fixed cam member which is fixed in the rotation direction and in the axial direction. The cam member 83 is a movable cam member which is arranged to be rotated relative to the cam member 84, and to be moved in the axial direction. Moreover, the movable cam member 83 includes a slidably abutting surface 83b which is positioned on a side opposite to the cam surface 83a, and which is slidably abutted on a back surface 32a of the movable pulley 32 through a thrust bearing and so on.

The electric actuator 80A rotationally drives the movable cam member 83 so that the cam surface 83a of the movable cam member 83 is rotated relative to the cam surface 84a of the fixed cam member 84. With this, the electric actuator 80A moves the movable cam member 83 in the axial direction of the rotation shaft 33 along the inclinations of the cam surface 83a and the cam surface 84a. With this, the electric actuator 80A moves the movable pulley 32 in the axial direction of the rotation shaft 33, so as to adjust the groove width of the V groove of the primary pulley 30P.

Moreover, the electric actuator 80A includes a worm gear mechanism 82 including a worm (screw gear, crossed helical gear) 82a, and a worm wheel (helical gear) 82b engaged with this worm 82a; and an electric motor 81 arranged to rotatably drive the worm 82a. The worm wheel 82b is disposed coaxially with the rotation shaft 33. The worm wheel 82b is connected with an outer circumference of the movable cam member 83 by serration so as to rotate as a unit with the movable cam member 83, and to allow the movement of the movable cam member 83 in the axial direction. With this, when the electric motor 81 is actuated to rotationally drive the worm 82a, the worm wheel 82b is rotated to pivot the movable cam member 83, so that the groove width of the V groove of the primary pulley 30P is adjusted.

The adjustment of the groove width of the V groove of the primary pulley 30P by the shift mechanism 8 is performed while receiving the thrust of the secondary pulley 30S which is generated by the thrust generating mechanism 9. When the groove width of the V groove of the primary pulley 30P is decreased, the groove width of the V groove of the secondary pulley 30S which is connected through the belt is increased. Accordingly, it is opposed to the thrust by the thrust generating mechanism 9. When the groove width of the V groove of the primary pulley 30P is increased, the groove width of the V groove of the secondary pulley 30S is decreased. Accordingly, the thrust by the thrust generating mechanism 9 is used.

For example, when the groove width of the V groove of the primary pulley 30P is decreased, the electric motor 81 is actuated so as to separate the movable cam member 83 from the fixed cam member 84. In accordance with this actuation, the winding radius of the belt 37 with respect to the primary pulley 30P is increased. Consequently, the tension of the belt 37 is increased. The increase of the tension of the belt 37 is acted to decrease the winding radius of the belt 37 with respect to the secondary pulley 30S. The increase of the groove width of the V groove of the secondary pulley 30S is needed for the decrease of the winding radius of the belt 37 with respect to the secondary pulley 30S. In the thrust generating mechanism 9 of the secondary pulley 30S, the effect to resist this increase of the groove width is generated as the thrust. Accordingly, the electric actuator 80A drives the movable cam member 83 to resist this thrust.

Moreover, when the groove width of the V groove of the primary pulley 30P is increased, the electric motor 81 is actuated so that the movable cam member 83 is moved closer to the fixed cam member 84. At this time, the winding radius of the belt 37 with respect to the primary pulley 30P is decreased, so that the tension of the belt 37 is decreased. The decrease of the tension of the belt 37 causes the slippage between the secondary pulley 30S and the belt 37. The movable pulley 35 of the secondary pulley 30S follows to the belt 37. However, the slippage of the fixed pulley 34 with respect to the belt 37 is generated. In accordance with this slippage, a torsion is generated between the fixed pulley 34 and the movable pulley 35. The thrust of the secondary pulley 30S is increased (strengthened) in accordance with this torsion between the fixed pulley 34 and the movable pulley 35.

[Auxiliary Electric Motor]

This variator 3 of the automatic transmission 2 is provided with an auxiliary electric motor 10 directly connected to the rotation shaft 33 of the primary pulley 30P. This auxiliary electric motor 10 rotationally drives the rotation shaft 33 during the switching operation by the engaging clutch mechanism 5a, so as to promote the rotation synchronism of the input side and the output side of one of the gear stages of the auxiliary transmission mechanism 4.

[Control Device]

As shown in FIG. 1, this vehicle includes an EVECU 110 configured to totally control the electric vehicle; and a CVTECU 100 configured to control main parts of the automatic transmission (CVT with the auxiliary transmission mechanism) 2. Each of the ECUs is a computer constituted by memories (ROM and RAM), CPU and so on. The CVTECU 100 is configured to control the actuations of the electric motor 81 constituting the electric actuator 80A of the shift mechanism 8, and the switching electric actuators 50A and 50B, and so on, based on command or information from the EVECU 110, and information from other sensors and so on.

[Operations and Effects]

The present embodiment is constituted as described above. Accordingly, it is possible to obtain following operations and effects.

The automatic transmission 2 is constituted by adding the auxiliary transmission mechanism (the constantly meshed parallel shaft type gear transmission mechanism) 4, and the direct connection gear mechanism 20 to the variator (the belt type continuously variable transmission mechanism) 3. Accordingly, the CVTECU 100 can select and use three main power transmitting modes shown in FIG. 3 by using, for example, a shift map shown in FIG. 4.

At the normal start of the vehicle, the CVT low mode in which the variator 3 is used and the auxiliary transmission mechanism is switched to the first speed (the Low) is selected, as shown in FIG. 3(a). When the vehicle speed is increased after the start, the CVT high mode in which the variator 3 is used and the auxiliary transmission mechanism 4 is switched to the second speed (the High) is selected, as shown in FIG. 3(b). In general, it is possible to handle the many traveling situations by this CVT high mode.

In this way, by using the auxiliary transmission mechanism 4, it is possible to travel in a wide range of the transmission gear ratio from a state (1st Low) in which the variator 3 is brought to the lowest in the CVT low mode where the auxiliary transmission mechanism 4 is brought to the first speed (the Low), to a state (2nd High) in which the variator 3 is brought to the highest in the CVT high mode where the auxiliary transmission mechanism 4 is brought to the second speed (the High), as shown in FIG. 4. By increasing the width of the transmission gear ratio of the automatic transmission 2, it is possible to decrease the load of the electric motor 1 of the driving source. Accordingly, it is possible to decrease the size of the electric motor 1, and thereby to decrease the entire size of the power train. Moreover, it is possible to use the region in which the good efficiency of the electric motor 1 is obtained, and thereby to improve the efficiency of the power train. With this, it is possible to increase the cruising range (driving range) of the electric vehicle.

Moreover, when the vehicle travels on the highway and so on at the high speed, the direct connection mechanism 20 is used as shown in FIG. 3(b). With this, it is possible to attain the power transmission by the gear having the high transmitting efficiency. Accordingly, it is possible to improve the energy efficiency for the above effects, and to increase the cruising range of the electric vehicle. Besides, in a case where the transmission gear ratio by the direct connection gear mechanism 20 is set to a value slightly higher than the transmission gear ratio of the second speed lowest as shown in a broken line of FIG. 4, it is possible to decrease the load of the motor at the high speed traveling, and to contribute to the increase of the cruising range of the electric vehicle.

At the switching of the three power transmitting modes, the synchronous rotation is performed by using the electric motor 1 and the auxiliary electric motor 10. With this, it is possible to promote the synchronous rotation, and to decrease the shift time period. Moreover, it is possible to decrease the shift shock. Furthermore, it is possible to surely perform the adjustment of the synchronism by the synchronous rotation by the electric motor 1 and the auxiliary electric motor 10, and to decrease the cost of the device by omitting the synchronous mechanism and so on.

For example, when the auxiliary transmission mechanism 4 is switched between the first speed (the Low) and the second speed (the High) by the engaging clutch mechanism 5B, the rotation of the rotation shaft 43 of the auxiliary transmission mechanism 4 is synchronized with the rotation of the gear 41 or the gear 42. In this case, the electric motor 1 and the auxiliary electric motor 10 are actuated to be cooperated with each other. With this, it is possible to rapidly obtain the synchronism by overcoming the large inertia mass of the variator 3, and to decrease the shift time periods.

Moreover, when the engaging clutch mechanism 5A switches a state in which the variator 3 is used, and a state in which the direct connection gear mechanism 20 is used, the input rotation member and the output rotation member of the engaging clutch mechanism 5A are brought to the synchronous rotation state. In this case, it is possible to use the electric motor 1 and the auxiliary electric motor 10.

For example, in a case of switching from the state in which the direct connection gear mechanism 20 is used, to a state in which the variator 3 is used, it is possible to rapidly switch by the following process.

(1) The engaging clutch mechanisms 5A and 5B are brought to the neutral state.
(2) It is controlled so that the rotation of the electric motor 1 which is the driving source is synchronized with the rotation of the rotation shaft 33 of the input portion (the primary pulley) 30P of the variator 3 while promoting the synchronous rotation of the gear (the gear 41 or the gear 42) corresponding to the gear stage to be attained, and the rotation shaft 43 of the auxiliary transmission mechanism 4, through the variator 3 by the auxiliary electric motor 10.
(3) The clutch mechanism 5a being in the neutral state is switched to the CVT position (C) so that the member on the input shaft 2A's side (the internal teeth 52a of the sleeve 52) and the input rotation member (the external teeth 38 of the rotation shaft 33) of the primary pulley 30P of the variator 3 are engaged with each other. The engaging clutch mechanism 5B being in the neutral state is switched to be connected to the gear (the gear 41 or the gear 42) corresponding to the gear stage to be attained.

With this, it is possible to switch the engaging clutch mechanisms 5A and 5B during the short time periods. It is difficult to provide the torque decrease (torque release) feeling. It is possible to improve the drive feeling of the shift.

Besides, the auxiliary electric motor 10 according to this embodiment merely uses for the synchronous rotation at the shift. Accordingly, it is possible to employ the small motor having the small output, and to suppress the increase of the cost of the device.

Moreover, the large torque is added to the power transmitting system for the amplification of the torque, on the more downstream side of the power transmitting path of the driving system unit of the vehicle. However, in a case where the auxiliary electric motor 10 is connected to the rotation shaft 33 of the primary pulley 30P on the relatively upstream side of the power transmitting path, it is easy to employ the small motor which has the small output, and which corresponds to the low torque.

Besides, it is conceivable that the output of this auxiliary electric motor 10 is used for the torque assist for driving the vehicle. In this case, the motor having the suitable output is employed as the auxiliary electric motor 10.

On the other hand, in a case of switching from the state in which the variator 3 is used, to the state in which the direct connection gear mechanism 20 is used, the both engaging clutch mechanisms 5A and 5B are brought to the neutral state. Then, the rotation of the electric motor 1 is controlled to be synchronized with the rotation of the input gear 21. When the rotations are brought to the synchronous state, the engaging clutch mechanism 5A being the neutral state is switched to the direct connection positon (D) so that the member on the input shaft 2A's side (the internal teeth 52a of the sleeve 52) and the member on the input gear 21's side (the external teeth 52a) are engaged with each other.

Besides, the engaging clutch mechanism 5B is maintained to the neutral state during the direct driving state.

Moreover, it is possible to obtain the following operations and effects by the torque cam mechanism (the torque cam device) 90.

At the driving, that is, at the power transmission from the drive cam member 91 to the driven cam member 93 (when the power is transmitted from the drive cam member 91 to the driven cam member 93), the first drive cam surface 91D of the drive cam member 91 and the second driven cam surface 92D of the intermediate cam member 92 are abutted on each other, so that the power is transmitted. At the coast, that is, at the power transmission from the driven cam member 93 to the drive cam member 91 (when the power is transmitted from the driven cam member 93 to the drive cam member 91), the first driven cam surface 93C of the driven cam member 93 and the second drive cam surface 92C of the intermediate cam member 92 are abutted on each other, so that the power is transmitted.

These first drive cam surface 91D, second driven cam surface 92D, first driven cam surface 93C and the second drive cam surface 92C which have the annular shapes can be formed around the entire circumference of the annular shape. It is possible to ensure the length of the cam surface by the entire circumference.

FIG. 9(a) is a schematic circumferential view in a case where the torque cam device is constituted without using the intermediate cam. As shown in FIG. 9(a), the drive cam surface 192D and the driven cam surface 192c can only ensure the length of the cam surface only by the half of the entire circumference of the annular shape. On the other hand, FIG. 9(b) is a schematic circumference view in a case where a difference in height (corresponding to the cam stroke) of the cam surfaces of the torque cam mechanism 90 according to the present invention is set identical to that of FIG. 9(a). In case of this torque cam mechanism 90, the respective cam surfaces 91D and 93C (also the cam surfaces 92D and 92C (not shown)) can be formed around the entire annular circumferences. Accordingly, it is possible to substantially double the length of the cam surfaces. Consequently, the inclination angle $\alpha2$ of the cam surfaces can be set to a value smaller than the inclination angle $\alpha1$ of the case in which the intermediate cam is not used ($\alpha2<\alpha1$) while ensuring the cam stroke amount. It is possible to increase the generated thrust.

Moreover, the respective connection surfaces 91j, 92j, and 93j are formed, respectively, in directions along the rotation axis (in the direction parallel to the rotation axis). Accordingly, the torque cam mechanism 90 is rapidly actuated.

That is, at the drive, the torque cam mechanism 90 is brought to the state where the power is transmitted from the drive cam member 91 toward the driven cam member 93, as shown in FIG. 8(a). The first drive cam surface 91D of the drive cam member 91 presses the second driven cam surface 92D of the intermediate cam member 92 (cf. an arrow F1), so that the connection surface 92j of the intermediate cam member 92 is abutted on the connection surface 93j of the driven cam member 93.

The connection surfaces 92j and 93j are formed, respectively, in the directions along the rotational axes. Accordingly, a component force F2 is acted to the second driven cam surface 92D in the rotation axis direction along the connection surfaces 92j and 93j. With this, the intermediate cam member 92 is pressed toward the driven cam member 93, as shown in FIG. 8(b). The second drive cam surface 92C of the intermediate cam member 92 is abutted on the first driven cam surface 93C of the driven cam member 93.

Moreover, when the power is started to be transmitted from the drive cam member 91 toward the driven cam member 93, the first drive cam surface 91D of the drive cam member 91 is slid along the second driven cam surface 92D of the intermediate cam member 92, so as to generate the thrust F3, as shown in FIG. 8(c).

In this way, the torque cam mechanism 90 is rapidly actuated.

On the other hand, in a case where the end surfaces 91j', 92j', and 93j' of the cam members 91', 92', and 93' are inclined so as not to be along the rotational axis as shown in FIG. 8(d), the thrust F4 by that angle is generated by the torque at the impact of the cam member 92' and the cam member 93' by the pressing force F' which is applied to the intermediate cam member 92 from the drive cam member 91. Accordingly, the cam member 92' is moved and returned toward the side of the cam member 91' C. Consequently, the operation of the torque cam mechanism 90 is delayed.

Moreover, the second driven cam surface 92D and the second drive cam surface 92C of the intermediate cam member 92 are formed to have the rotation shift (deviation) in the rotational direction. Accordingly, it is possible to avoid the positional interference of the cam surfaces 92D and 92C, and thereby to suppress the axial length of the intermediate cam member 92. In this embodiment, the phase shift of the cam surfaces 92D and 92C is set to 90 degrees. Accordingly, it is possible to suppress the axial length of the intermediate cam member 92 at the maximum degree.

In case of this torque cam device 90, the guide groove 92G arranged to guide the movements of the balls 95 is formed around the entire circumferences of the second driven cam surface 92D and the second drive cam surface 92C of the intermediate cam member 92. Accordingly, the plurality of the balls 95 can be disposed between the cam surfaces. Moreover, it is possible to ensure the lengths of the cam surfaces, without increasing the inclination angle of the cam surface. Consequently, it is possible to suppress the loads (load burdens) of the balls 95 and the cam surfaces 91D, 92D, 92C, and 93C. For example, in a case where it is used in the thrust generating mechanism of the shift mechanism of the belt type continuously variable transmission, it is possible to generate the large thrust, and to sufficiently ensure the ratio coverage, without increasing the size of the device.

In particular, the guide groove 92G includes the helical groove portions 92g each formed in the helical shape along one of the helical curved surfaces 92d; and the connection groove portions 92m each of which is formed between the helical groove portions 92g, and which smoothly connects the helical groove portions 92g. Accordingly, the movements of the balls 95 are not restricted to decrease the sliding resistance (friction). With this, the balls 95 can be smoothly moved around the entire circumference.

Moreover, the connection portions 91J, 92J, and 93J are formed between the equally divided helical curved surfaces 91d, 92d, 92c, and 93c of the cam surfaces 91D, 92D, 92C, and 93C. These connection portions 91J, 92J, and 93J include, respectively, the first connection surface 91j, 92, and 93j each extending in the axial direction from the end portion of one of the helical curved surfaces connected with each other; and the second connection surfaces 91k, 92k, and 93k each connecting one of the end portions of the first connection surfaces 91j, 92j, and 93j and the end portion of the other of the helical curved surfaces. Each of the second connection surfaces 91k, 92k, and 93k is a surface perpendicular to the axis direction. Accordingly, it is possible to decrease the axial lengths of the drive cam member 91, the intermediate cam member 92, and the driven cam member 93.

Furthermore, the guide groove 92G includes the opening portion 98. The guide groove 92G receives the portion of each of the balls 95 which is greater than the half portion of the each ball 95 so that a part of the each ball 95 protrudes from the opening portion 98 in the outside direction. An opening width of the opening portion 98 is smaller than an outside diameter of each of the balls 95. Accordingly, the balls 95 are surely held within the guide groove 92G without being detached from the guide groove 92G.

The insertion diameter increasing portion 96 is formed at a portion of the guide groove 92G. The insertion diameter increasing portion 96 has the increased diameter for inserting the balls 95 into the guide groove 92G. The screw members 97 are mounted to the insertion diameter increasing portion 96 to close the diameter increasing portion of the insertion diameter increasing portion 96. The screw members 97 are the detachment preventing portions arranged to prevent the detachment of the inserted balls 95 from the inside of the guide groove. Accordingly, the balls 95 are surely held within the guide groove 92G without being detached from the insertion diameter increasing portion 96.

Moreover, the insertion diameter increasing portion 96 is formed in the region of the above-described $\varepsilon$, in particular, in the valley portion on the lower side of the half portion of the inclination surface of the cam. Accordingly, the balls 95 are constantly abutted by the multipoint contacts near the insertion diameter increasing portion 96. Consequently, the cam members 91, 92, and 93 can be accurately slid along the helical curved surfaces. For example, it is possible to suppress the concentration of the stress in a case of the one point contact at which the concentration of the stress is generated in the members around the one point contact by the generation of the inclinations of the cam members 91, 92, and 93 with respect to the axial direction. Therefore, it is possible to improve the durability.

In the above-described embodiment, the torque cam mechanism 90 is constituted by three cam members 91, 92, and 93. However, in the present invention, the middle cam member 92 is optional in the torque cam mechanism 90. As shown in FIG. 15, the present invention is applicable to the torque cam mechanism which does not have the intermediate cam member 92.

As shown in FIG. 15, the torque cam mechanism 90 includes two cam members of a drive cam member 91 which is disposed and fixed on a back surface of the movable pulley 35; and a driven cam member 193 which is disposed and fixed on the rotation shaft 36 of the fixed pulley 34. The drive cam member 91 drives the driven cam member 193 at the drive running (the drive travel) of the vehicle. The driven cam member 193 drives the drive cam member 91 at the coast running (the driven running, or the driven travel) of the vehicle.

The drive cam member 91 is identical to that of the first embodiment as shown in FIG. 15(b). Accordingly, the explanations are omitted [cf. FIG. 6(b)].

As shown in FIG. 15(a), the driven cam member 193 has a shape which is substantially symmetrical to the drive cam member 91. The driven cam member 193 includes a first driven cam surface 193D which is an annular shape, and which is provided on one end side, and the other end side fixed on the rotation shaft 36. An entire annular circumference of the annular first driven cam surface 193D is equally divided into two. The respective first driven cam surfaces 193D have helical curved surfaces 193d according to predetermined cam angles. Connection portions 193J are formed, respectively, between the driven cam surfaces 193D equally divided into two. Each of the connection portions 193J includes a connection surface (first connection surface) 193j which is formed into a stepped shape from an end portion of one of the helical curved surfaces 193d, and which extends in the axial direction; and a second connection surface 193k connecting an end portion of the connection surface 193j, and an end portion of the other the helical curved surfaces 193d. Each of the connection surface 193j is formed in an axial direction (a direction parallel to the rotation axis) along the rotation axis of the driven cam member 193. Each of the connection surfaces 193j is also formed in the axial line direction of the driven cam member 193. Each of the second connection surface 193k is a surface perpendicular to the axial direction of the driven cam member 193.

The first driven cam surface 193D of the driven cam member 193 is arranged to be abutted on the first drive cam surface 91D of the drive cam member 91. The balls (steel balls) 95 are disposed between the both drive cam surfaces 91D and 193D. The torque cam mechanism 90 is constituted as a ball torque cam device.

Accordingly, as shown in FIGS. 15(a) and (b), the helical curved surfaces of the first drive cam surface 91D of the drive cam member 91, and the driven cam surface 193D of the driven cam member 193 include, respectively, grooves (guide grooves) 91g and 193G which have arc sections, and which are arranged to guide the balls 95. With this, portions between the drive cam surface 91D and the driven cam surface 193D are smoothly slid by point contacts by the balls 95.

Besides, in this variation of the embodiment, the guide groove 193G of the driven cam surface 193D of the driven cam member 193 includes helical groove portions 193g and connection groove portions 193m, like the guide groove 92G of the second driven cam surface 92D of the intermediate cam member 92 in the embodiment. Moreover, the guide groove 193G includes the opening portion (not shown), like the guide groove 92G. The guide groove 193G receives a portion of each of the balls 95 which is larger than a half portion of the each of the balls 95 so that a portion of the each of the balls 95 protrudes from the opening portion in the outside direction. An opening width of the opening portion is smaller than an outside diameter of each of the balls 95.

Furthermore, an insertion diameter increasing portion (not shown) is formed in a portion of the opening portion of the guide groove 193G. The insertion diameter increasing portion 96 has an increased diameter for inserting the balls 95 into the groove 193G. An detachment preventing portion (for example, screw member 97) is mounted to the insertion diameter increasing portion. The detachment preventing portion is arranged to prevent the detachment (separation) of the inserted balls 95 from the inside of the guide groove. Moreover, the insertion diameter increasing portion is formed in the range of the above-described angle $\varepsilon$, in particular, in the valley portion on the lower side of the half of the inclination surface of the cam.

By the above-described configuration, it is possible to obtain the operations and the effects which are identical to those of the first embodiment.

Besides, the guide groove which is larger than that of the semicircle, and which is arranged to hold the balls 95 may be formed in the drive cam member 91.

[Others]

Hereinbefore, the embodiment according to the present invention is illustrated. However, the present invention is not limited to the embodiment. It is possible to implement the present invention by appropriately varying the embodiment, or by partially employing the embodiment, as long as the it is not deviated from the gist of the present invention.

For example, in the first embodiment, the first drive cam surface 91D of the drive cam member 91 and the second driven cam surface 92D of the intermediate cam member 92 include, respectively, the guide grooves 91g and 93G arranged to continuously guide the balls 95 disposed between the first drive cam surface 91D of the drive cam member 91 and the second driven cam surface 92D of the intermediate cam member 92, in the entire circumference. The guide groove 93G of the second driven cam surface 92D of the intermediate cam member 92 is the guide groove receiving a portion of the each ball 95 which is greater than the half of the each ball 95. However, the guide groove 91g of the first drive cam surface 91D may be the guide groove receiving the portion of the each ball 95 which is greater than the half of the each ball 95.

Moreover, the second drive cam surface 92C of the intermediate cam member 92 and the first driven cam surface 93C of the driven cam member 93 include, respectively, the guide grooves 92G and 93G arranged to continuously guide the balls 95 disposed between the second drive cam surface 92C of the intermediate cam member 92 and the first driven cam surface 93C of the driven cam member 93, in the entire circumference. The guide groove 92G of the second drive cam surface 92D of the intermediate cam member 92 is the guide groove receiving a portion of each of the balls 95 which is greater than the half of the each ball 95. However, the guide groove 93g of the first driven cam surface 93C may be the guide groove receiving the portion of the each ball 95 which is greater than the half of the each ball 95.

Moreover, in the second embodiment, the drive cam surface 91D of the drive cam member 91 and the driven cam surface 93C of the driven cam member 93 include, respectively, the guide grooves 91g and 93G arranged to continuously guide the balls 95 disposed between the drive cam surface 91D of the drive cam member 91 and the driven cam surface 93C of the driven cam member 93, in the entire circumference. The guide groove 93G of the driven cam surface 93C of the driven cam member 93 is the guide groove receiving a portion of the each ball 95 which is greater than the half of the each ball 95. However, the guide groove 91g of the drive cam surface 91D may be the guide groove receiving the portion of the each ball 95 which is greater than the half of the each ball 95.

However, the processing of the guide groove receiving the portion of the each ball 95 which is greater than the half of the each ball 95 needs special tools. Accordingly, the guide grooves receiving the portion of the each ball 95 which is greater than the half of the each ball 95 are formed on the both ends of the intermediate cam member 92 so that the processing which needs the special tools is convergently performed in the intermediate cam member 92, like the first embodiment. With this, it is possible to effectively perform the processing.

In the above-described embodiment, the engaging clutch mechanisms 5A and 5B employ three positon type to simplify the configuration of the device. A combination of two engaging clutch mechanisms of two position type can be used to one or both of these engaging clutch mechanisms 5A and 5B.

Furthermore, the pulley devices 30P and 30S in which this torque cam device 90 is applied can be applied to the hybrid electric vehicle, and the vehicle driven by the engine, in addition to the electric vehicle.

Moreover, the mechanical reaction force mechanism is not limited to the end surface cam mechanism shown in the embodiment. In the case of the end surface cam mechanism, the mechanism having the torque capacity can be constituted to the small size.

Furthermore, in the above-described embodiment, the synchronism mechanism is not provided to the engaging portions of the engaging clutch mechanism 5A and 5B. However, in a case where the synchronism mechanism is provided to the engaging portions, the high accuracy of the rotation synchronism control is not needed. Accordingly, it is possible to operate the engagement of the clutch mechanisms 5A and5B before the completion of the rotation synchronism, and to decrease the time period needed for the shift.

Besides, in the above-described embodiments, the guide groove 193G prevents the detachment of the balls 95. However, for example, it is optional to provide a holding device which is arranged to hold the balls, which is disposed between the cam surfaces for preventing the detachment of the balls, and which is a member different from the drive cam member and the driven cam member.

**Claims**

1. A torque cam device for an automatic transmission, the torque cam device being arranged to convert a rotation torque transmitted in the automatic transmission to an axial thrust, the torque cam device comprising:

   a drive cam member which includes a first drive cam surface which has an annular shape, and which is arranged to be rotated by receiving the rotation torque; and
   a driven cam member which includes a first driven cam surface that has an annular shape, and that confronts the first drive cam surface, and which is arranged to be driven to be rotated through a ball by the drive cam member,
   each of the first drive cam surface and the first driven cam surface including an entire annular circumference equally divided into at least two sections each having a helical curved surface according to a cam angle, and connection portions formed between the equally divided helical curved surfaces, and
   at least one of the helical curved surfaces of the first drive cam surface and the first driven cam surface having a guide groove which is continuous in an entire circumference, and which is arranged to guide movement of the ball.

2. The torque cam device for the automatic transmission as claimed in claim 1, wherein each of the connection portions includes a first connection surface extending in an axial direction from an end portion of one of the both helical curved surfaces connected with each other by the connection portions, and a second connection surface connecting an end portion of the first connection surface, and an end portion of the other of the both helical curved surfaces; and the second connection surface is a surface perpendicular to the axial direction.

3. The torque cam device for the automatic transmission as claimed in claim 1 or 2, wherein the guide groove includes helical groove portions each formed in a helical shape along one of the helical curved surfaces, and connection groove portions each of which is formed between the helical groove portions, and which smoothly connects the helical groove portions.

4. The torque cam device for the automatic transmission as claimed in one of claims 1 to 3, wherein a plurality of the balls are mounted in a series state within the guide groove.

5. The torque cam device for the automatic transmission as claimed in one of claims 1 to 4, wherein the torque cam device further includes an intermediate cam member which includes a second drive cam surface that is formed on one end of the intermediate cam member, and that is arranged to be abutted on the first drive cam surface, a second driven cam surface that is formed on the other end of the intermediate cam member, and that is arranged to be abutted on the first driven cam surface, and which is arranged to be rotated relative to the driven cam member and the driven cam member; when a power is transmitted from the drive cam member to the driven cam member, the first drive cam surface and the second driven cam surface are abutted on each other to transmit the power; and when the power is transmitted from the driven cam member to the drive cam member, the first driven cam surface and the second drive cam surface are abutted on each other to transmit the power.

# FIG.1

## FIG. 2

**FIG. 3**

(a)　(b)　(c)

## FIG. 4

PRIMARY ROTATION SPEED

1st Low

2nd Low

FULL LOAD LINE

1st High

DIRECT CONNECTION

2nd High

0

VEHICLE SPEED

## FIG. 5

**FIG. 6**

(a)

(b)

**FIG. 7**

(a)

(b)

(c)

# FIG. 8

(a)

(b)

(c)

(d)

# FIG. 9

(a)

(b)

# FIG. 10

(a)

(b)

(c)

# FIG. 11

(a)

92g
92G
92m
92
D
D
92G
C
92m
C
92D
97
0°, 360°
92g
97   96

(b)

0°, 360°
92m
92g
E
92G
97   97   F
F
96
92C
92g
92G
92m

(c)

92D
92g
92
92C
92g

(d)

92D
92g
G
92
92C
92g

# FIG. 12

(a)

92k

92j

92m — 95

(b)

92m — 95

92j

92k

# FIG. 13

(a)

d

W

95

98a 98a

92d

98

92g

(b)

98a 98 98a

92d

96 (95)

97 97

(c)

95

98

99 99

# FIG. 14

（a）

（b）

# FIG. 15

（a）

（b）

# FIG. 16

(a)

(b)

**INTERNATIONAL SEARCH REPORT**

| International application No. |
| --- |
| PCT/JP2016/052856 |

A.   CLASSIFICATION OF SUBJECT MATTER
*F16H25/12*(2006.01)i,  *F16H9/12*(2006.01)i

According to International Patent Classification (IPC) or to both national classification and IPC

B.   FIELDS SEARCHED

Minimum documentation searched (classification system followed by classification symbols)
F16H25/12,  F16H9/12-9/20

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 60-026844 A  (Aisin-Warner Ltd.),<br>09 February 1985 (09.02.1985),<br>page 3, upper right column, line 8 to page 4,<br>lower right column, line 15; fig. 1 to 4<br>(Family: none) | 1-5 |
| Y | US 2005/0050973 A1  (OLSCHEWSKI, Armin),<br>10 March 2005 (10.03.2005),<br>paragraphs [0011] to [0029]; fig. 1 to 7<br>(Family: none) | 1-5 |
| Y | JP 2010-053883 A  (NTN Corp.),<br>11 March 2010 (11.03.2010),<br>paragraphs [0028] to [0063]; fig. 1 to 9<br>(Family: none) | 2-5 |

| ☒   Further documents are listed in the continuation of Box C. | ☐   See patent family annex. |
| --- | --- |

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>04 April 2016 (04.04.16) | Date of mailing of the international search report<br>19 April 2016 (19.04.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

International application No.

PCT/JP2016/052856

C (Continuation).  DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 133516/1981(Laid-open No. 038055/1983) (Nissan Motor Co., Ltd.), 12 March 1983 (12.03.1983), (Family: none) | 1-5 |
| P,X | WO 2015/045772 A1  (JATCO Ltd.), 02 April 2015 (02.04.2015), paragraphs [0027] to [0098]; fig. 1 to 11 (Family: none) | 1,3,5 |

Form PCT/ISA/210 (continuation of second sheet) (January 2015)

**EP 3 276 206 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58038055 A

- JP 60026844 A